Europäisches Patentamt

European Patent Office

Office européen des brevets

(11) Publication number: **0 054 793**
**B1**

(12) **EUROPEAN PATENT SPECIFICATION**

(45) Date of publication of patent specification: **10.04.85**

(51) Int. Cl.⁴: **B 01 D 17/02,** C 02 F 1/40

(21) Application number: **81110152.6**

(22) Date of filing: **04.12.81**

(54) Apparatus and process for treating a fluid.

(30) Priority: **24.12.80 US 220206**

(43) Date of publication of application:
**30.06.82 Bulletin 82/26**

(45) Publication of the grant of the patent:
**10.04.85 Bulletin 85/15**

(84) Designated Contracting States:
**DE FR IT**

(56) References cited:
**EP-A-0 016 517**
**DE-A-2 910 307**
**DE-C- 555 806**
**GB-A-1 036 679**
**GB-A-2 035 118**
**US-A-3 589 023**

(73) Proprietor: **ALLIED CORPORATION**
**Columbia Road and Park Avenue P.O. Box 2245R
(Law Dept.)
Morristown New Jersey 07960 (US)**

(72) Inventor: **Figiel, Francis John
320 Hill Street
Boonton New Jersey 07005 (US)**
Inventor: **Osterman, Harry Fred
925 Minisink Way
Westfield New Jersey 07090 (US)**

(74) Representative: **Collier, Jeremy Austin Grey
et al
J.A.Kemp & Co. 14, South Square Gray's Inn
London WC1R 5EU (GB)**

Courier Press, Leamington Spa, England.

## Description

Technical Field

This invention relates to an apparatus for and process of treating liquid mixtures of a less dense liquid component and a more dense liquid component, the components being substantially immiscible in each other, and the less dense component being present as a contaminant. Specifically, this invention relates to the removal of the less dense liquid component from the liquid mixture.

Background Art

It is known to treat a liquid mixture containing a less dense liquid component and a more dense liquid component, the components being substantially immiscible in each other. Illustrative of this type of prior art are U.S. Patent 3,125,106 to Brucken et al.; U.S. Patent 3,559,297 to Figiel, U.S. Patent 3,589,023 to Figiel, U.S. Patent 3,710,450 to Figiel, U.S. Patent 3,733,710 to Kearney et al. and U.S. Patent 4,136,217 to Henley. The Kearney et al. patent shows treatment of the liquid mixture using a conventional water separator to separate water from the more dense liquid. The Henley patent shows an overflow pipe 26 for overflowing a top portion of a liquid mixture that has an oil emulsion as the top portion and wash water as the bottom portion. The liquid overflow is allowed to reach a quiescent condition so that there is formed an oil layer and a water layer. The oil layer is removed by a conventional rotating belt oil skimmer 30.

The Figiel patents show a process in which the liquid mixture thereof is allowed to overflow from one tank into a second tank. The second tank has an overflow pipe for removing the less dense liquid, and a drainpipe for removing the more dense liquid. Drainpipe 7 in U.S. Patent 3,710,450 to Figiel runs upwardly and parallel to wall 8 before turning to empty into reservoir 9. The height of drainpipe 7 determines the level of solvent in water separating pump 4. Overflow pipe 6 is connected to the water separating sump at a point slightly above the level of drainpipe 7.

This prior art and the other prior art of which we are aware fails to provide an apparatus and process for treating a liquid mixture containing a less dense liquid component and a more dense liquid component, the components being substantially immiscible in each other, that provides for rapid separation of the liquid mixture into an upper layer of the less dense liquid and a lower layer of the more dense liquid and for rapid restriction in cross-sectional area of the interface between the upper and lower layers. Rapid separation and cross-sectional area restriction of the interface are of substantial importance since dissolution of one liquid by the other is minimized and substantially complete removal of the less dense liquid is made possible.

In US—A—3589023 there is disclosed an apparatus for treating liquid mixtures of a less dense liquid component and a more dense liquid component, the components being substantially immiscible in each other, and the less dense component being present as a contaminant, such apparatus including a tank, a separator chamber provided with an exit channel, a weir separating the tank from the separator channel, and a holding chamber for holding the denser component after separation of the less dense component therefrom. This prior construction has a single tank with a weir over which liquid can overflow into a simple separation chamber having outlets at top and bottom for the removal of the less dense and denser components respectively. This construction has the disadvantage that separation efficiency is reduced if there are surges in the liquid overflowing the weir and disturbing the contents of the separation chamber. This can quite readily take place during dipping an object to be dried into and removing it from the tank. The present invention is directed at providing an apparatus, and a process, which reduces or overcomes these problems to improve the efficiency of separation in the separation chamber.

The present invention relates to an apparatus for treating liquid mixtures of a less dense liquid component and a more dense liquid component, the components being substantially immiscible in each other, and the less dense component being present as a contaminant, such apparatus including a tank, a separator chamber provided with an exit channel, a weir separating the tank from the separator chamber, and a holding chamber for holding the denser component after separation of the less dense component therefrom, characterized in that the holding chamber is partitioned into a first subchamber and a second subchamber by a chamber-partitioning weir having an upper lip that is at a height slightly below said exit channel; the separator chamber is provided with an upper portion that converges towards an opening leading to a riser tube, the liquid-exit channel and an airlock-preventing vent, the liquid-exit channel being situated at a height below the upper edge of said tank weir; an overflow channel downstream of said tank weir is in liquid communication with said separator chamber through an outlet and the separator chamber is in liquid communication with said first subchamber through a lower or underflow channel the cross sectional area of which is greater than the cross sectional area of the outlet, said lower or underflow channel extending from side to side at the bottom of the apparatus and being defined at the top by the lower edge of a wall dividing the separator chamber from said holding chamber. With this construction the provision of the overflow channel between the tank weir and the separator chamber assists in providing more quiescent conditions in the separator chamber in that the inflow of liquid into the separator chamber from the collector channel is below the level of the liquid surface in the separator chamber such that rapid separation of the less dense component to the top of the separator chamber can take place. Also the provision of the collector channel helps to absorb any surges of liquid overflowing the weir prior to passing them through the outlet opening from the overflow channel to the separator chamber. Furthermore the possibility of an excess pressure building-up in the separator chamber during surge conditions is avoided by having the channel from the separator chamber to the holding chamber of larger cross sectional area than the outlet from the overflow channel. It is also ensured that the less dense liquid only overflows from the separator chamber by having the holding chamber divided into two subchambers by the weir the top edge of which is slightly below the level of the exit channel at the top of the separator chamber. Accordingly the level of liquid in the separator channel can rise sufficiently above the level of the weir in the holding chamber for overflow to take place only when there is a sufficient depth of less dense liquid in the separator chamber for its surface to reach the exit channel, balancing the height of the denser liquid at least substantially completely filling the depth to the top of the weir separating the first subchamber from the second subchamber.

The narrowing of the upper end of the separator chamber leads to a greater depth of less dense liquid for a given quantity thereof in the separator chamber and thus facilitates making sure that substantially pure less dense liquid is discharged through the exit channel. This also increases the efficiency of the operation as described above due to the height of the weir in the holding chamber being below the height of the exit channel at the top of the separator chamber.

In another preferred embodiment, the apparatus includes the tank, separator chamber, and holding chamber described above, and additionally includes another separator chamber and another holding chamber. This embodiment has a second separator chamber having an upper portion that converges in an opening leading to a second riser tube, said second riser tube having a second liquid-exit channel and a second air lock-preventing vent, said second liquid-exit channel being situated at a height below the upper lip of a second chamber-partitioning weir, a second holding chamber having therein a chamber-partitioning weir having an upper lip that is at a height slightly below said second liquid-exit channel, said chamber-partitioning weir dividing said second holding chamber into a first subchamber and a second subchamber; said second separator chamber being positioned between, and in liquid communication with, said second subchamber of said first holding chamber and said first subcompartment of said second holding chamber; said second subchamber serving as a second overflow channel having an outlet that is located at a height below said outlet of said first overflow channel; and a second lower channel being provided from side to side of the bottom of said apparatus beneath the lower end of a wall dividing said second separator chamber from said second holding chamber, the cross-sectional area of said second lower channel being greater than the cross-sectional area of said outlet of said second overflow channel.

The double separating action helps to ensure a product of the denser liquid which has a very large proportion of the less-dense contaminant liquid removed therefrom.

Another aspect of the invention provides a process of treating liquid mixtures of a less dense liquid component and a more dense liquid component, the components being substantially immiscible in each other, and the less dense component being present as a contaminant, said process comprising the steps of overflowing the liquid from the tank of the apparatus of the invention over said weir, removing from the overflow liquid at least a portion of said less dense liquid component by (a) channelling said overflow liquid from said overflow channel into a narrowed opening in the separator chamber whereby (1) said overflow liquid is separated into an upper layer of the less dense liquid and a lower layer of the more dense liquid and (2) the interface between the upper and lower layers is restricted in cross-sectional area as it passes into said narrowed area, and (b) then passing an upper portion of the layered overflow liquid through said less dense liquid-exit channel, passing a lower portion of said layered overflow liquid from said separator chamber into the holding chamber through said lower or underflow channel which has a cross-sectional area sufficiently greater than the cross-sectional area of an outlet of said overflow channel from said weir for pressure build-up to be avoided in the event of a surge of said liquid through said apparatus.

The process may include the additional steps of repeating the process using the first holding chamber as the tank of a further separation using a second separator chamber discharging to a second holding chamber.

Brief Description of the Drawing

Reference is hereby made to the accompanying drawing which forms a part of the specification of this application.

Figure 1 of the drawing is a plan view of a preferred embodiment of the invention, showing an apparatus having one separator chamber.

Figure 2 is a cross-sectional view of the apparatus shown in Figure 1, taken along the line 2—2 of Figure 1.

Figure 3 is a plan view of another preferred embodiment of the invention, showing an apparatus having two separator chambers.

Figure 4 is a cross-sectional view of the apparatus shown in Figure 3, taken along the line 4—4 in Figure 3.

Figure 5 is a partial cross-sectional view of the apparatus shown in Figure 1, taken along the line 5—5 of Figure 1. This figure shows the lower or underflow channel 62.

Figure 6 is a partial cross-sectional view of the apparatus of Figure 3, taken along the line 6—6 of Figure 3. This figure shows underflow channel 130.

Figure 7 shows an alternate embodiment of a portion of the apparatus shown in Figure 2.

Best Mode for Carrying Out the Invention

As explained above, in accordance with the invention, there is provided a novel apparatus and process for treating a fluid containing a less dense liquid component and a more dense liquid component. The components are substantially immiscible in each other, and the less dense component is present as a contaminant.

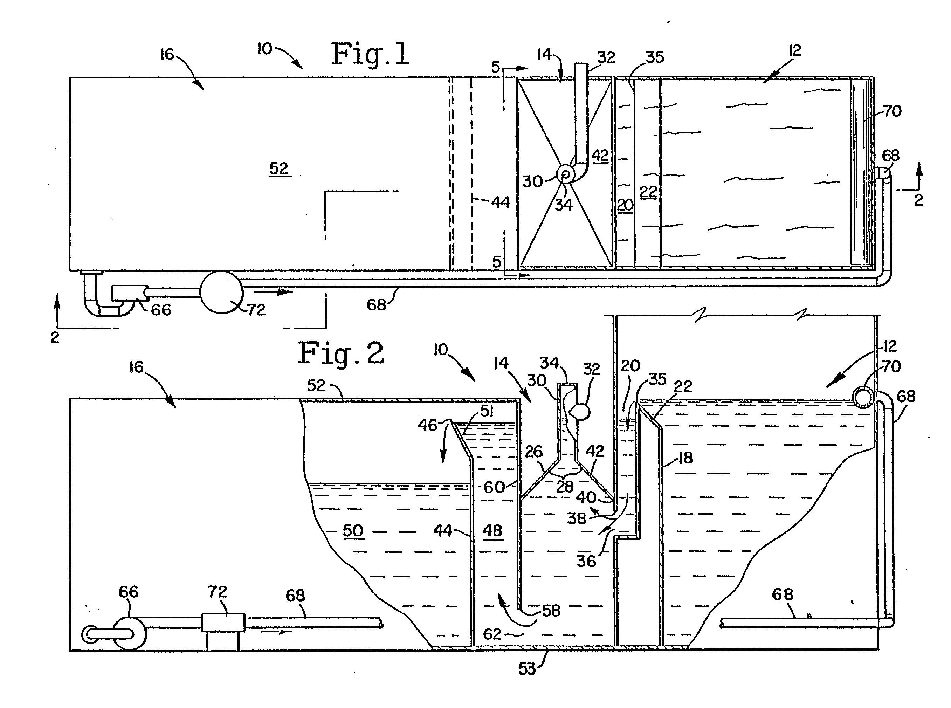

Referring to Figures 1 and 2, a preferred embodiment of an apparatus 10, in accordance with the present invention, is provided that includes a tank 12, a separator chamber 14 and a holding chamber 16. Tank 12 has a weir 18 of preselected height that separates the tank from an overflow channel 20, which leads to separator chamber 14. Preferably, an upper part 22 of weir 18 is sloped in the direction of overflow channel 20 in order to provide good sweeping action for separation of contaminants introduced into tank 12 from a cleaning solvent contained therein.

Tank 12 is illustratively used for cleaning work pieces by immersing the work pieces in the solvent contained therein. The solvent is, for example, at room temperature, and is illustratively a halogenated solvent such as an azeotrope of trichlorotrifluoroethane with isopropanol and/or ethanol or an azeotrope of trichlorotrifluoroethane and methylene chloride. The halogenated solvent may also be an azeotrope of trichloromonofluoromethane with any of or a mixture of isopropanol, ethanol and methylene chloride.

Separator chamber 14 has an upper portion 26 that converges in a V-shaped opening 28 leading to a riser tube 30. The riser tube has a liquid exit channel 32 and an air lock-preventing vent 34. Liquid-exit channel 32 is situated at a height below an upper edge 35 of weir 18. Vent 34 is located at a height above liquid-exit channel 32.

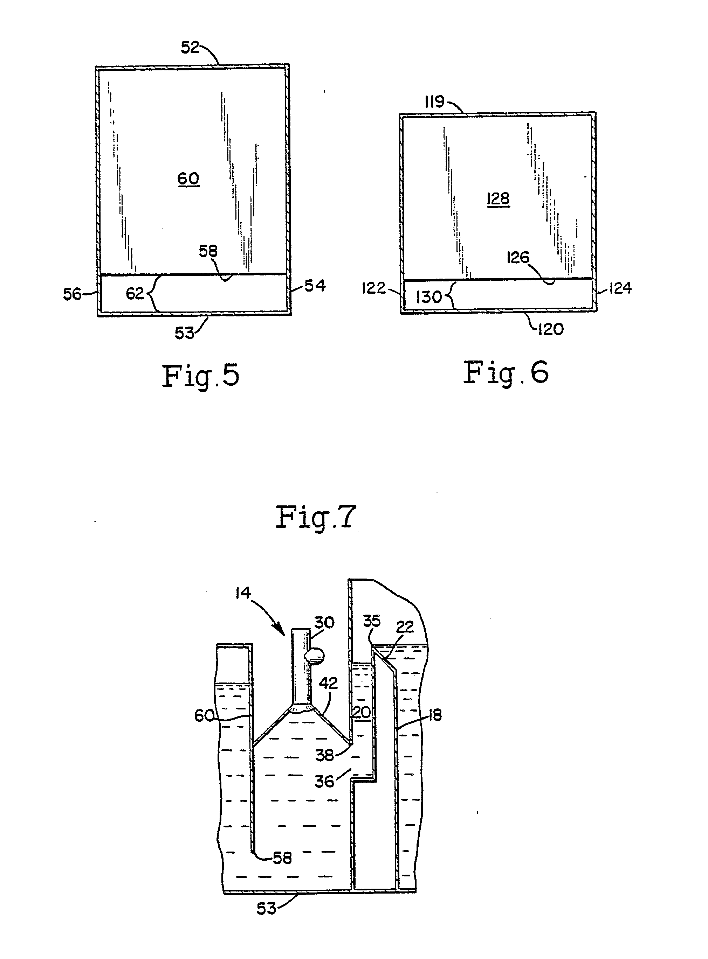

Overflow channel 20 has an outlet 36 that has an upper edge 38. Preferably, upper edge 38 is below a point 40 at which a side 42 of upper portion 26 begins converging toward riser tube 30. Side 42 is the side of upper portion 26 closest to tank 12. Alternatively, the point at which side 42 begins converging toward riser tube 30 could coincide with upper edge 38, as shown in Figure 7. However, the preferred embodiment of this aspect of the apparatus, described above, has the advantage of reducing turbulence in the area of V-shaped opening 28 and thus promotes better separation of the less dense liquid component and the more dense liquid component.

The configuration of separator chamber 14 provides for rapid separation of the liquid stream entering chamber 14 into an upper layer of the less dense liquid and a lower layer of the more dense liquid, and provides for rapid restriction in cross-sectional area of the interface between the upper and lower layers. Riser tube 30 to which the V-shaped opening leads, provides for facile removal of the upper layer since the cross-sectional area thereof is relatively small. Thus, a relatively small amount of contaminant will provide a layer several inches (about 7—9 centimeters) deep in riser tube 30. Contaminant is removed from the apparatus through exit channel 32. Insoluble particulate matter that is entrained by the liquid contaminant is also removed through exit channel 32.

Holding chamber 16 has a weir 44 having an upper lip 46 that is at a height slightly below exit channel 32. The height difference depends, for example, upon the specific gravity of the liquids involved. If, for instance, the immiscible liquids are water and a halogenated solvent such as a fluorocarbon, upper lip 46 is minimally about one half inch (1.3 centimeter) below exit channel 32. Weir 44 partitions holding chamber 16 into a first subchamber 48 and a second subchamber 50. Preferably, an upper part 51 of weir 44 is sloped in the direction of subchamber 50 in order to provide good sweeping action. Holding chamber 16 preferably has a top portion 52 so that loss of treated liquid contained therein, into air surrounding holding chamber 16 is prevented. As shown in the drawing, the configuration of the apparatus prevents solvent vapor loss except in the vicinity of tank 12. Loss of vapors of the more dense solvent is negligible through vent 34 since the aperture of the vent is relatively small and since the less dense liquid component is situated between the more dense liquid component and vent 34.

Referring to Figure 5, a bottom portion 53, a side portion 54, a side portion 56 (each of apparatus 10) and a lower end 58 of a wall 60 form lower or underflow channel 62. Wall 60 divides separator chamber 14 from holding chamber 16. The cross-sectional area of channel 62 is sufficiently greater than the cross-sectional area of outlet 36 of overflow channel 20 so that pressure build-up is avoided in the event of surge of fluid through apparatus 10.

Preferably, apparatus 10 includes a pump 66 for returning the treated fluid from subchamber 50 to tank 12. Pump 66 communicates with subchamber 50 and tank 12 through line 68, which exits in a sparger 70. Line 78 preferably further includes a filter 72 for removing any unseparated insoluble contaminants from the treated fluid prior to recycling to tank 12. Filter 72 is conveniently located between pump 66 and sparger 70.

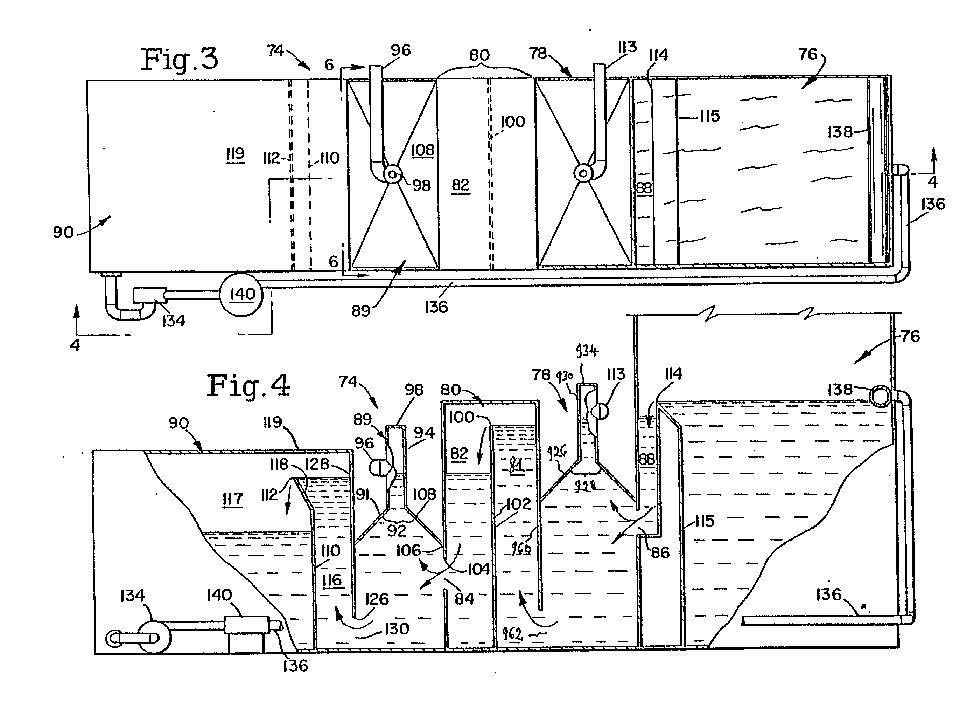

Referring to Figures 3 and 4, another preferred embodiment of an apparatus 74, in accordance with the present invention, is provided that is characterized by the presence of two separator chambers. Whether this apparatus or the one just described is used to remove contaminants, depends upon factors such as the ease of separating the less dense liquid component from the more dense liquid component. For example, if separation is not too difficult, the apparatus of Figures 1 and 2 is satisfactory. However, where the separation is difficult, then the apparatus of Figures 3 and 4 should be used. In situations where extremely difficult liquid separation is involved, an apparatus in accordance with the present invention could have three or more separator chambers.

Apparatus 74 has a tank 76, a separator chamber 78, and a holding chamber 80 that are identical to tank 12, separator chamber 14 and holding chamber 16, described above, except that subchamber 82 of holding chamber 80 serves as an overflow channel. Overflow channel 82 has an outlet 84 that is located at a height below outlet 86 of overflow channel 88.

In addition to tank 76, separator chamber 78 and holding chamber 80, apparatus 74 includes separator chamber 89 and holding chamber 90. Separator chamber 89 has an upper portion 91 that converges in a V-shaped opening 92 that leads to a riser tube 94. Riser tube 94 has a liquid-exit channel 96 and an air lock-preventing vent 98. Exit channel 96 is situated at a height below an upper lip 100 of a weir 102. Vent 98 is located at a height above exit channel 96.

Preferably, an upper edge 104 of outlet 84 of overflow channel 82 is below a point 106 at which a side 108 of upper portion 91 begins converging toward riser tube 94. Side 108 is the side closest to holding chamber 80. Alternatively, the point at which side 108 begins converging toward riser tube 94 could coincide with upper edge 104, in the very same way as shown in Figure 7 for the apparatus of Figures 1 and 2. However, the preferred embodiment of this aspect of the apparatus has the advantage of reducing turbulence in the area of V-shaped opening 92 and thus promotes better separation of the less dense liquid component and the more dense liquid component.

As can be understood from the above description, separator chamber 89 has the same configuration as separator chamber 14 of the earlier described embodiment. Thus, separator chamber 89 provides the advantages described above such as rapid separation of the liquid mixture(s) into an upper and a lower layer.

Holding chamber 90 has therein a partitioning weir 110 having an upper lip 112 that is at a height slightly below exit channel 96. The relative height of upper lip 112 and exit channel 96 is the same as that described above for upper lip 46 and exit channel 32. As can be seen from this description, the apparatus has been provided with a configuration that provides for a downstream flow of the fluid stream exiting tank 76. Specifically, a liquid-exit channel 113 of separator chamber 78 is below an upper edge 114 of weir 115 of tank 76, upper edge 100 of weir 102 is slightly below exit channel 113, exit channel 96 is below upper lip 100, and upper lip 112 is slightly below exit channel 96. Also, overflow channel 82 has an outlet 84 that is located at a height below outlet 86 of overflow channel 88.

Partitioning weir 110 of holding chamber 90 divides chamber 90 into first subchamber 116 and second subchamber 117. An upper part 118 of partitioning weir 110 is preferably sloped in the direction of subcompartment 117. Holding chamber 90 preferably has a top portion 119 for preventing loss of treated fluid contained therein into air surrounding chamber 90. As can be seen from Figure 4, vapors of the more dense liquid component are subject to loss into the surrounding air only in the vicinity of tank 76.

Referring to Figure 6, a bottom portion 120, a side portion 122, a side portion 124 (each of apparatus 74), and a lower end 126 of a wall 128 form a lower or underflow channel 130. Wall 128 divides separator chamber 89 from holding chamber 90. The cross-sectional area of lower or underflow channel 130 is sufficiently greater than the cross-sectional area of outlet 84 of overflow channel 82 so that pressure build-up is avoided in the event of a surge of fluid through apparatus 74.

Preferably, apparatus 74 includes a pump 134 for returning treated fluid from subchamber 117 to tank 76. Pump 134 communicates with subchamber 117 and tank 76 through line 136, which exits in sparger 138. Preferably, line 136 further includes a filter 140 for removing any unseparated insoluble contaminants from the treated fluid prior to recycling to tank 76. Filter 140 is conveniently located between pump 134 and sparger 138.

A process in accordance with the present invention for treating a fluid comprising a less dense liquid component and a more dense liquid component, and using the apparatus of Figures 1 and 2, will now be described. The liquid components are substantially immiscible in each other, and the less dense component is present as a contaminant.

In the first essential step of the process, in accordance with the invention, the fluid is allowed to flow over weir 18. In accordance with the invention, in the next essential step, the less dense liquid component is removed from the overflow liquid. Removal is achieved by channelling the overflow liquid from overflow channel 20 into V-shaped opening 28 as a result of which the overflow liquid is rapidly separated into an upper layer of the less dense liquid and a lower layer of the more dense liquid, and as a result of which the interface between the upper and lower layers is rapidly restricted in cross-sectional area. Removal then involves passing an upper portion of the layered overflow liquid through exit channel 32.

In the third step, in accordance with the invention, a lower portion of the layered overflow liquid is passed from separator chamber 14 into holding chamber 16. The lower portion is passed through lower or underflow channel 62 into the first subchamber 48. In accordance with the invention, in the fourth essential step, the underflow liquid is allowed to flow over weir 44 into the second subchamber 50 to provide a purified overflow liquid.

Preferably, the process further includes the step of recycling the purified overflow liquid from subchamber 50 to tank 12 via sparger 70. When the process includes recycling, it is preferable to filter the recycled liquid.

In accordance with the invention, a process using the apparatus shown in Figures 3 and 4 will now be described. This process includes the essential steps described above and the following additional steps. In this process, some of the less dense liquid is not removed in separator chamber 78. In the first additional essential step of the process of this embodiment, there is removed any unseparated less dense liquid from the purified overflow liquid. Removal is achieved by channelling the purified overflow liquid from subchamber 82, which serves as overflow channel 82, into V-shaped opening 92 of separator chamber 89. As a result, the purified overflow liquid is rapidly separated into an upper layer of the remaining less dense liquid and a lower layer of the more dense liquid. Also, as a result, the interface between the upper and lower layers is rapidly restricted in cross-sectional area. Removal then involves passing an upper portion of the layered, purified overflow liquid through exit channel 96.

In accordance with the invention, in the next additional essential step, a lower portion of the layered, purified overflow liquid is passed from separator chamber 89 into the first subchamber 116 of holding chamber 90. The lower portion is passed through lower or underflow channel 130. In the final additional, essential step, the purified underflow liquid is allowed to flow over upper lip 112 of partitioning weir 110 into the second chamber 117 to provide a more purified overflow liquid.

Preferably, this process further includes the step of recycling the overflow liquid from subchamber 117 to tank 76, via sparger 138. When the process includes the step of recycling, it preferably includes the step of filtering the recycled liquid to remove any particulate matter therefrom.

Work pieces that have been cleaned by immersion in the cleaning solvent of tank 12 or 76 may be transferred to a vapor degreaser for final cleaning. The vapor degreaser may range from a simple vapor degreaser to a multi-stage liquid-liquid-vapor degreaser with ultrasonics. The combination of equipment provided for cleaning by immersion in a solvent followed by vapor spray treatment is particularly useful for the removal of water-based cutting oils and water films from metal, glass and plastic substrates.

The apparatus of the present invention is conveniently constructed of metal. Suitably, each riser tube is provided with a glass window so that the level of the interface between the upper and lower layers may be observed. Conveniently, the cross-sectional area of an underflow channel is at least about twice as great as the cross-sectional area of an outlet of the upstream overflow channel.

In this disclosure, there is shown and essentially described only two preferred embodiments of the invention. It is to be understood that the invention is capable of modifications or changes within the scope of the inventive concept expressed herein.

## Claims

1. Apparatus for treating liquid mixtures of a less dense liquid component and a more dense liquid component, the components being substantially immiscible in each other, and the less dense component being present as a contaminant, such apparatus including a tank (12, 76), a separator chamber (14, 78) provided with an exit channel (32, 113), a weir (18, 115) separating the tank from the separator chamber, and a holding chamber (16, 80) for holding the denser component after separation of the less dense component therefrom, characterized in that the holding chamber (16, 80) is partitioned into a first subchamber (48, 81) and a second subchamber (50, 82) by a chamber-partitioning weir (44, 102) having an upper lip (46, 100) that is at a height slightly below said exit channel (32, 113); the separator chamber (14, 78) is provided with an upper portion (26, 926) that converges toward an opening (28, 928) leading to a riser tube (30, 930), the liquid-exit channel (32, 113) and an air lock-preventing vent (34, 934), the liquid-exit channel being situated at a height below the upper edge (35, 114) of said tank weir (18, 115); an overflow channel (20, 88) downstream of said tank weir (18, 115) is in liquid communication with said separator chamber (14, 78) through an outlet (36, 86) and the separator chamber (14, 78) is in liquid communication with said first subchamber (48, 81) through a lower or underflow channel (62, 962) the cross-sectional area of which is greater than the cross-sectional area of the outlet (36, 86), said lower or underflow channel (62, 962) extending from side to side at the bottom of the apparatus and being defined at the top by the lower edge of a wall (60, 960) dividing said separator chamber from said holding chamber.

2. Apparatus according to claim 1, characterized by a second separator chamber (89) having an upper portion (91) that converges in an opening (92) leading to a second riser tube (94), said second riser tube having a second liquid-exit channel (96) and a second air lock-preventing vent (98), said second liquid-exit channel being situated at a height below the upper lip (100) of the partitioning weir (102), and a second holding chamber (90) having therein a chamber-partitioning weir (110) having an upper lip (112) that is at a height slightly below said second liquid-exit channel (96), said chamber-partitioning weir (110) dividing said second holding chamber into a first subchamber (116) and a second subchamber (117); said second separator chamber (74) being positioned between, and in liquid communication with, the second subchamber (82) of the first holding chamber (80) and said first subchamber (116) of said second holding chamber (90); the second subchamber (82) of holding chamber (80) serving as a second overflow channel having an outlet (84) that is located at a height below the outlet (86) of overflow channel (88); and a second lower or underflow channel (130) being provided from side to side of the bottom of said apparatus beneath the lower end (126) of a wall (128) dividing said second separator chamber (89) from said second holding chamber (90), the cross-sectional area of said lower channel (130) being greater than the cross-sectional area of the outlet (84).

3. Apparatus according to claim 1 or 2 characterized by a pump (66, 134) in a line (68, 136) connected to return liquid from subchamber (50, 117) to said tank (12, 76), filter means (72, 140) being situated in said line between said pump and said tank.

4. Apparatus according to any preceding claim, characterized in that said (second) holding chamber has a top portion (52, 119) and in that an upper part (51, 118) of said weir (44, 110) therein is sloped in the direction to widen the top of said first subchamber (48, 116).

5. A process of treating liquid mixtures of a less dense liquid component and a more dense liquid component, the components being substantially immiscible in each other, and the less dense component being present as a contaminant, said process comprising the steps of overflowing said liquid from the tank (12) of the apparatus of claim 1 over said weir (18), removing from the overflow liquid at least a portion of said less dense liquid component by (a) channelling said overflow liquid from said overflow channel (20) into a narrowed opening in the separator chamber (14) whereby (1) said overflow liquid is separated into an upper layer of the less dense liquid and a lower layer of the more dense liquid and (2) the interface between the upper and lower layers is restricted in cross-sectional area as it passes into said narrowed area, and (b) then passing an upper portion of the layered overflow liquid through said less dense liquid-exit channel (32), passing a lower portion of said layered overflow liquid from said separator chamber (14) into the holding chamber (16) through said lower or underflow channel (62) which has a cross-sectional area sufficiently greater than the cross-sectional area of an outlet of said overflow channel from said weir for pressure build-up to be avoided in the event of a surge of said liquid through said apparatus.

6. A process according to claim 5, characterized in that it is carried out using the apparatus of claim 2 and includes the additional steps of removing from the purified overflow liquid in the first holding chamber (80) which comprises said more dense liquid and any unseparated less dense liquid, at least a portion of said any unseparated less dense liquid by (a) channelling said purified overflow liquid from subchamber (82), which serves as a second overflow channel, into an opening of the second separator chamber (89), whereby (1) said purified overflow liquid is rapidly separated into an upper layer of said less dense liquid and a lower layer of a more dense liquid and (2) the interface between the upper and lower layers is rapidly restricted in cross-sectional area, and (b) then passing an upper portion of the layered, purified overflow liquid through the second less dense liquid-exit channel (96); passing a lower portion of the layered, purified overflow liquid from said second separator chamber into said second holding chamber; and flowing the purified underflow liquid over said second chamber-partitioning weir (110) into subchamber (114) to provide a purified overflow liquid.

7. A process according to claim 5 or 6, characterized in that said purified overflow liquid is filtered while being recycled from said second subchamber to said tank.

**Revendications**

1. Un appareil pour traiter des mélanges de liquides comprenant un composant liquide moins dense et un composant liquide plus dense, les composants étant sensiblement non miscibles l'un dans l'autre, et le composant moins dense étant présent en tant que produit de contamination, un tel appareil comprenant une cuve (12, 76), une chambre (14, 78) de séparateur munie d'un conduit d'évacuation (32, 113), un déversoir (18, 115) séparant la cuve de la chambre de séparateur et une chambre de retenue (16, 80) pour contenir le composant plus dense après séparation de ce dernier du composant moins dense, caractérisé en ce que la chambre de retenue (16, 80) est divisée en une première sous-chambre (48, 81) et un seconde sous-chambre (50, 82) par un déversoir (44, 102) divisant la chambre qui comporte une lèvre supérieure (46, 100) qui est située à une hauteur légèrement inférieure à celle dudit conduit d'évacuation (32, 113); la chambre (14, 78) de séparateur est munie d'une partie supérieure (26, 926) qui converge vers une ouverture (28, 928) débouchant dans un tube ascenseur (30, 930), du conduit (32, 113) d'évacuation de liquide et d'un évent (34, 934) empêchant la formation d'un bouchon d'air, le conduit d'évacuation de liquide étant situé à une hauteur inférieure à celle du bord supérieur (35, 114) dudit déversoir (18, 115) de la cuve; un conduit de trop plein (20, 38) situé en aval dudit déversoir (18, 115) de la cuve est mise en communication liquidienne avec ladite chambre (14, 78) de séparateur par un orifice de sortie (36, 86) et la chambre (14, 78) de séparateur est mise en communication liquidienne avec ladite première sous-chambre (48, 81) par un conduit inférieur ou conduit d'écoulement de fond (62, 962) dont la surface de section transversale est supérieure à la surface de section transversale de l'orifice de sortie (36, 86), ledit conduit inférieur ou conduit d'écoulement de fond (62, 962) s'étendant d'un côté à l'autre au fond de l'appareil et étant délimité à son sommet par le bord inférieur d'une paroi (60, 960) qui sépare la chambre de séparateur de ladite chambre de retenue.

2. Appareil selon la revendication 1, caractérisé par une seconde chambre (89) de séparateur ayant une partie supérieure (91) qui converge vers une ouverture (92) aboutissant à un seconde tube ascenseur (94), ledit second tube ascenseur comportant un second conduit (96) d'évacuation de liquide et un second évent (98) empêchant la formation d'un bouchon d'air, ledit second conduit d'évacuation de liquide étant situé à une hauteur inférieure à celle de la lèvre supérieure (100) du déversoir de séparateur (102) et une seconde chambre de retenue (90) comportant un déversoir (110) divisant la chambre qui comporte une lèvre supérieure (112) qui est située à une hauteur légèrement inférieure à celle dudit second conduit (96) d'évacuation de liquide, ledit déversoir (110) divisant la chambre divisant ladite seconde chambre de retenue en une première sous-chambre (116) et une seconde sous-chambre (117); ladite seconde chambre (74) de séparateur étant positionnée entre la seconde sous-chambre (82) de la première chambre de retenue (80) et ladite première sous-chambre (116) de ladite seconde chambre de retenue (90) et étant en communication liquidienne avec elles; las seconde sous-chambre (82) de la chambre de retenue (80) servant de second conduit de trop plein ayant un orifice de sortie (84) qui est situé à une hauteur inférieure à celle de l'orifice de sortie (86) du conduit de trop plein (88); et un second conduit inférieur ou conduit d'écoulement de fond (130) s'étendant d'un côté à l'autre du fond dudit appareil au-dessous de l'extrémité inférieure (126) d'une cloison (128) qui sépare ladite seconde chambre (89) de séparateur de ladite seconde chambre de retenue (90), la surface de la section transversale dudit conduit inférieur (130) étant plus grande que la surface de la section transversale de l'orifice de sortie (84).

3. Appareil selon la revendication 1 ou 2, caractérisé par une pompe (66, 134) montée dans une canalisation (68, 136) raccordée pour retourner le liquide de la sous-chambre (50, 117) à ladite cuve (12, 76), des moyens de filtration (72, 140) étant montés dans ladite canalisation entre ladite pompe et ladite cuve.

4. Appareil selon une quelconque revendication précédente, caractérisé en ce que ladite (seconde) chambre de retenue comporte une partie supérieure (52, 119) et en ce qu'une partie supérieure (51, 118) dudit déversoir (44, 110) qui y est disposé est inclinée dans un sens qui élargit la partie supérieure de ladite première sous-chambre.

5. Un procédé de traitement de mélanges de liquides comprenant un composant liquide moins dense et un composant liquide plus dense, les composants étant sensiblement non miscibles l'un dans l'autre et le composant moins dense étant présent en tant que produit de contamination, ledit procédé comprenant les étapes qui consistent à faire déborder le liquide hors de la cuve (12) de l'appareil de la revendication 1 par dessus ledit déversoir (18), à extraire du liquide de trop plein au moins une partie dudit composant liquide moins dense a) en canalisant ledit liquide de trop plein provenant dudit conduit de trop plein (20) dans une ouverture étranglée débouchant dans la chambre (14) de séparateur de telle sorte que 1) ledit liquide de trop plein est séparé en une couche supérieure du liquide moins dense et une couche inférieure du liquide plus dense et 2) l'interface entre les couches supérieure et inférieure a une surface de section transversale diminuée lorsqu'elle passe dans ladite région étranglée, et b) en faisant passer ensuite une partie supérieure du liquide de trop plein divisé en couches par ledit conduit (32) d'évacuation dudit liquide moins dense, en faisant passer une partie inférieure dudit liquide de trop plein divisé en couches hors de la chambre (14) de séparateur dans la chambre de retenue par ledit conduit inférieur ou conduit d'écoulement de fond (62) qui a une surface de section transversale suffisamment plus grande que la surface de la section transversale d'un orifice de sortie dudit conduit de trop plein dudit déversoir pour éviter qu'une élévation de la pression se produise dans le cas d'une vague dudit liquide à travers ledit appareil.

6. Un procédé selon la revendication 5, caractérisé en ce qu'il est effectué en utilisant l'appareil de la revendication 2 et comporte les étapes supplémentaires qui consistent à extraire du liquide de trop plein purifié contenu dans la première chambre de retenue (80) qui comprend ledit liquide plus dense et tout le liquide moins dense non séparé au moins une partie dudit liquide moins dense non séparé restant a) en canalisant ledit liquide de trop plein purifié s'écoulant hors de la sous-chambre (82), qui sert de second conduit de trop plein, dans une ouverture débouchant dans la seconde chambre (89) de séparateur de sorte que 1) ledit liquide de trop plein purifié est rapidement séparé en une couche supérieure dudit liquide moins dense et une couche inférieure d'un liquide plus dense, et 2) l'interface entre les couches supérieure et inférieure a sa section transversale qui diminue rapidement et b) en faisant ensuite passer une partie supérieure du liquide de trop plein purifié divisé en couches dans un conduit (96) d'évacuation du liquide moins dense; en faisant passer une partie inférieure du liquid de trop plein purifié divisé en couches provenant de ladite seconde chambre du séparateur dans ladite seconde chambre de retenue; et en faisant écouler le liquide s'écoulant au fond purifié pardessus ledit déversoir (110) divisant la seconde chambre dans une sous-chambre (117) pour produire un liquide de trop plein purifié.

7. Un procédé selon la revendication 5 ou 6, caractérisé en ce qu ledit liquide de trop plein purifié est fitré au cours de son retour pour recyclage de ladite seconde sous-chambre à ladite cuve.

**Patentansprüche**

1. Vorrichtung zur Behandlung von Flüssigkeitsgemischen einer weniger dichten flüssigen Komponente und einer dichteren flüssigen Komponente, wobei die Komponenten im wesentlichen nicht miteinander mischbar sind und die weniger dichte Komponente als eine Verunreinigung vorliegt, mit einem Behälter (12, 76), einer Trennkammer (14, 78), die mit einem Ausgangskanal (32, 113), einem den Behälter von der Trennkammer trennenden Wehr (18, 115) und einer Aufnahmekammer (16, 80) zur Aufnahme der dichteren Komponente nach Abtrennung von der weniger dichten Komponente von ihr versehen ist, dadurch gekennzeichnet, daß die Aufnahmekammer (16, 80) in eine erste Unterkammer (48, 81) und eine zweite Unterkammer (50, 82) durch ein Kammerunterteilungswehr (44, 102) mit einer oberen Lippe (46, 100), die sich in einer Höhe etwas unterhalb des Ausgangskanals (32, 113) befindet, unterteilt ist, die Trennkammer (14, 78) mit einem oberen Abschnitt (26, 926) versehen ist, der zu einer zu einem Steigrohr (30, 930), dem Flüssigkeitsausgangskanal (32, 113) und einer einen Luftverschluß verhindernden Belüftungsöffnung (34, 934) führenden Öffnung (28, 928) konvergiert, wobei der Flüssigkeitsausgangskanal in einer Höhe unter der Oberkante (35, 114) des Behälterwehrs (18, 115) liegt, ein Überlaufkanal (20, 88) abstromwärts von dem Behälterwehr (18, 115) in Flüssigkeitsverbindung mit der Trennkammer (14, 78) über einen Auslaß (36, 86) steht und die Trennkammer (14, 78) in Flüssigkeitsverbindung mit der ersten Unterkammer (48, 81) über einen unteren oder Unterlaufkanal (62, 962) steht, dessen Querschnittsfläche größer als die Querschnittsfläche des Auslasses (36, 86) des unteren oder Unterlaufkanals (62, 962) ist, der sich am Boden der Vorrichtung von einer Seite zur anderen erstreckt und am oberen Ende der Unterkante einer Wand (60, 960), die die Trennkammer von der Aufnahmekammer trennt, begrenzt ist.

2. Vorrichtung nach Anspruch 1, gekennzeichnet durch eine zweite Trennkammer (89) mit einem oberen Abschnitt (91), der zu einer zu einem zweiten Steigrohr (94) führenden Öffnung (92) konvergiert, wobei das zweite Steigrohr einen zweiten Flüssigkeitsausgangskanal (96) und eine zweite die Luftabsperrung verhindernde Belüftungsöffnung (98) besitzt, der zweite Flüssigkeitsausgangskanal in einer Höhe unter der oberen Lippe (100) des Trennwehrs (102) liegt und eine zweite Aufnahmekammer (90) ein die Kammer unterteilendes Wehr (110) mit einer oberen Lippe (112) besitzt, die sich in einer Höhe etwas unterhalb des zweiten Flüssigkeitsausgangskanals (96) befindet, wobei das die Kammer trennende Wehr (110) die zweite Aufnahmekammer in eine erste Unterkammer (116) und eine zweite Unterkammer (117) unterteilt, die zweite Trennkammer (24) zwischen der zweiten Unterkammer (82) der ersten Aufnahmekammer (80) und der ersten Unterkammer (116) der zweiten Aufnahmekammer (90) angeordnet ist und sich in Flüssigkeitsverbindung mit ihnen befindet, die zweite Unterkammer (82) der Aufnahmekammer (80) als ein zweiter Überlaufkanal mit einem Auslaß (84), der in einer Höhe unter dem Auslaß (86) des Überlaufkanals (88) liegt, dient und ein zweiter unterer oder Unterlaufkanal (130) von einer Seite des Bodens dieser Vorrichtung zur anderen unterhalb des unteren Endes (126) einer Wand (128) vorgesehen ist, welche die zweite Trennkammer (89) von der zweiten Aufnahmekammer (80) trennt, wobei die Querschnittsfläche des unteren Kanals (130) größer als die Querschnittsfläche des Auslasses (84) ist.

3. Vorrichtung nach Anspruch 1 oder 2, gekennzeichnet durch eine Pumpe (66, 134) in einer Leitung (68, 136), die so verbunden ist, daß sie Flüssigkeit von der Unterkammer (50, 117) zu dem Behälter (12, 76) zurückführt, und Filtereinrichtungen (72, 140), die in der Leitung zwischen der Pumpe und dem Behälter angeordnet sind.

4. Vorrichtung nach einem der vorausgehenden Ansprüche, dadurch gekennzeichnet, daß die (zweite) Aufnahmekammer einen oberen Abschnitt (52, 119) besitzt und daß ein oberer Teil (51, 118) des Wehrs (44, 110) darin in der Richtung geneigt ist, die das obere Ende der ersten Unterkammer (48, 116) aufweitet.

5. Verfahren zur Behandlung von Flüssigkeitsgemischen einer weniger dichten flüssigen Komponente und einer dichteren flüssigen Komponente, wobei die Komponenten im wesentlichen nicht miteinander mischbar sind und die weniger dichte Komponente als eine Verunreinigung vorliegt, mit den Verfahrensstufen, gemäß denen man die Flüssigkeit aus dem Behälter (12) der Vorrichtung gemäß Anspruch 1 über das Wehr (18) überlaufen läßt, von der Überlaufflüssigkeit wenigstens einen Teil der weniger dichten flüssigen Komponente entfernt, indem man a) die Überlaufflüssigkeit aus dem Überlaufkanal (20) in eine verengte Öffnung in der Trennkammer (14) führt, wobei 1. die Überlaufflüssigkeit in eine obere Schicht der weniger dichten Flüssigkeit und eine untere Schicht der dichteren Flüssigkeit getrennt wird und 2. die Grenzfläche zwischen der oberen und der unteren Schicht im Querschnitt beschränkt wird, wenn sie in den verengten Bereich kommt, und b) dann einen oberen Teil der geschichteten Überlaufflüssigkeit durch den Ausgangskanal (32) für die weniger dichte Flüssigkeit führt, einen unteren Teil der geschichteten Überlaufflüssigkeit aus der Trennkammer (14) in die Aufnahmekammer (16) durch den unteren oder Unterlaufkanal (62) führt, der eine ausreichend größere Querschnittsfläche als die Querschnittsfläche eines Auslasses des Überlaufkanals von dem Wehr besitzt, um einen Druckaufbau im Falle eines Stoßes der Flüssigkeit durch die Vorrichtung zu vermeiden.

6. Verfahren nach Anspruch 5, dadurch gekennzeichnet, daß es unter Verwendung der Vorrichtung nach Anspruch 2 durchgeführt wird und die zusätzlichen Stufen einschließt, in denen man von der gereinigten Überlaufflüssigkeit in der ersten Aufnahmekammer (80), die die dichtere Flüssigkeit und unabgetrennte weniger dichte Flüssigkeit umfaßt, wenigstens einen Teil der unabgetrennten weniger dichten Flüssigkeit entfernt, indem man a) diese gereinigte Überlaufflüssigkeit von der Unterkammer (82), die als ein zweiter Überlaufkanal dient, in eine Öffnung der zweiten Trennkammer (89) führt, wobei 1. die gereinigte Überlaufflüssigkeit schnell in eine obere Schicht der weniger dichten Flüssigkeit und eine untere Schicht einer dichteren Flüssigkeit getrennt wird und 2. die Grenzfläche zwischen der oberen und unteren Schicht schnell in ihrer Querschnittsfläche beschränkt wird, und b) dann einen oberen Teil der geschichteten, gereinigten Überlaufflüssigkeit durch den zweiten Auslaßkanal (96) für weniger dichte Flüssigkeit führt, einen unteren Teil der geschichteten, gereinigten Überlaufflüssigkeit von der zweiten Trennkammer in die zweite Aufnahmekammer führt und die gereinigte Überlaufflüssigkeit über das zweite die Kammer trennende Wehr (110) in die Unterkammer (117) laufen läßt, um eine gereinigte Überlaufflüssigkeit zu erhalten.

7. Verfahren nach Anspruch 5 oder 6, dadurch gekennzeichnet, daß die gereinigte Überlaufflüssigkeit filtriert wird, während sie von der zweiten Unterkammer zu dem Behälter zurückgeführt wird.

Fig.1

Fig.2

0 054 793

Fig.3

Fig.4

Fig.5

Fig.6

Fig.7